# EUROPEAN PATENT SPECIFICATION

(11) **EP 1 218 231 B1**
(45) Date of publication and mention of the grant of the patent: **19.04.2006**
(21) Application number: 00969668.3
(22) Date of filing: 09.10.2000
(51) Int. Cl.: B60T 17/00

(54) **VEHICLE AIR BRAKING SYSTEMS**
FAHRZEUG- DRUCKLUFTBREMSANLAGE
SYSTEME DE FREINAGE PNEUMATIQUE DE VEHICULE

(30) Priority: 08.10.1999 GB 9923723
(43) Date of publication of application: 03.07.2002
(73) Proprietor: WABCO AUTOMOTIVE U.K. LIMITED, Morley Leeds LS27 0HQ (GB)
(72) Inventor: TONKIN, Philip, Wabco Automotive UK Ltd, Engin Div, Morley, Leeds LS27 0HQ (GB)
(74) Representative: Gray, James
(86) International application number: PCT/GB2000/003872
(87) International publication number: WO 2001/026947

(56) References cited:
- DE-A- 4 325 102
- FR-A- 2 575 937
- US-A- 5 936 154

## Description

The present invention relates to vehicle air braking systems, and particularly to the removal of moisture from such systems.

A typical air braking system includes a compressor, an air dryer for compressor outlet air and a reservoir for pressurised air. The compressor output is directed via a non-return valve through the air dryer to the reservoir. The reservoir may comprises a purge volume and a service volume separated by a non return valve. Periodically dry air from the purge volume is directed back through the air dryer (which typically includes a bed of desiccant material) in order to purge the majority of moisture therefrom. Purging may be controlled by, for example a timer, and can occur after the compressor has been off load for a predetermined time.

It is important that moisture is periodically removed from the air dryer so as to prevent degradation of the desiccant bed, and corrosion of the air dryer and other components and conduits of the braking system. In periods of cold weather it is possible that moisture present in an air dryer overnight can freeze with the consequence that operation of the air dryer is impeded and/or the air dryer is damaged and/or the braking system rendered inoperable.

As described above, purging occurs after the compressor has been off load for a predetermined time. This presents a problems when purging the air dryer before a vehicle ceases to be used, for example when it is parked overnight. In bringing the vehicle to a standstill air is expended from the reservoir, and the resulting drop in reservoir pressure can bring the compressor on-load to replenish the reservoir. As a purge of the air dryer cannot be carried out while the compressor is on-load, the vehicle engine must be run until the compressor goes off-load before the air dryer can be purged. Consequently a vehicle driver must remain in the vehicle with the engine running until the reservoir is replenished. Such a procedure is both wasteful of the driver's time and vehicle fuel, and thus often the system is not purged at the end of the working day, as would be desirable.

According to the present invention there is provided a vehicle air braking system including an air compressor, an air dryer, an air dryer control valve having a vent to atmosphere, a reservoir adapted to contain a quantity of dry air for use in regenerating desiccant of the air dryer and means to exhaust dry air through the desiccant to atmosphere, characterised in that the system further includes control means sensitive to the operating condition of the vehicle and operable to cause regeneration of the desiccant and purging of the control valve when the vehicle engine is stopped.

The control means of the present invention sense when operation of the vehicle ceases, for example when it is parked, and automatically regenerates the desiccant to remove moisture therein. This eliminates the need for the driver of the vehicle to keep the engine running and wait for the compressor to go off load. By regenerating the desiccant automatically on vehicle shutdown, the possibility that the desiccant may be damaged by the freezing of moisture therein is reduced. Moisture which may be present in venting ducts, control valve passageways or in the air dryer body is also expelled, which reduces the possibility of the subsequent operation of the venting system being hampered or prevented by ice.

A further advantage of the invention is that automatic regeneration at the end of the working day necessarily leaves the desiccant in a dry condition. In turn this can reduce the time to pump up the system on the following day since an intermediate regeneration might be avoided. Such an intermediate regeneration would interrupt charging if the air dryer remained in a relatively wet condition at the end of the previous working day, and become saturated part way through initial charging. Intermediate regeneration could be triggered by for example moisture sensing or the sensing of volume pumped since the previous regeneration.

In a preferred embodiment the control means are operable to open the control valve vent of the air braking system, and preferably to close the vent once regeneration has taken place. Closure of the vent isolates the control valve and desiccant from atmosphere and prevents the ingress of matter such as dust and insects, and further prevents degradation of the desiccant via moisture in the ambient atmosphere. The control means may be responsive to the state of the vehicle ignition system. The vent may open against a resilient bias and thus automatically return to the closed condition after regeneration. Such an arrangement ensures that the braking system is closed against ingress of moisture through the vent valve whilst in a passive condition.

Preferably the control valve is switchable between an inlet position, where air received at an inlet thereof passes to the reservoir via the desiccant, and an exhaust position where air in the reservoir is permitted to flow through the desiccant and control valve vent to atmosphere. The control valve can thus be used for both periodic regeneration of the desiccant when the vehicle is in use and purging of the system at the end of the working day. In a preferred embodiment the control valve and vent are provided in a common housing of the air dryer. It will be appreciated that that such an arrangement eliminates the need for additional piping to be provided between control-valve, vent and air dryer which reduces the size of the system and complexity. By positioning the control valve is intermediate a desiccant chamber of the air dryer and the vent, it is ensured that the control valve is purged of any moisture contained therein. In a preferred embodiment the reservoir surrounds the air dryer.

The invention also provides a method of regenerating an air dryer of a vehicle air braking system characterised in that the air dryer is regenerated and a control valve of the air dryer purged at the end of the working day, the method comprising the steps of
determining that the vehicle engine is stopped;
connecting a regeneration reservoir of dry air to the air dryer;
connecting the air dryer and control valve to atmosphere; and
backflushing the air dryer and control valve to remove moisture therefrom.

Such a method may be used in an existing air dryer installation by suitable control of system components.

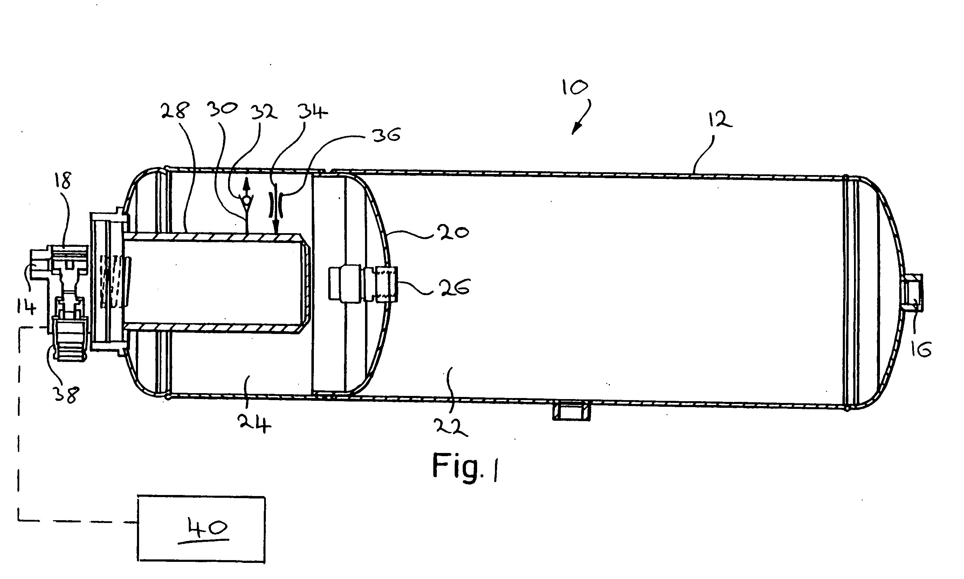

An embodiment of the present invention will now be described with reference to the accompanying drawing (Figure 1) which shows cross sectional representation of combined reservoir and dryer assembly according to the present invention.

The assembly, generally designated 10, comprises an airtight container 12 having an inlet 14 and an outlet 16. The inlet 14 is closed by a control valve 18. The outlet 16 is closable in use by a demand valve of the air braking system (not shown) within which the component is incorporated. The container 12 is provided with an internal partition 20 dividing the interior thereof into two chambers; a service chamber 22 and a purge chamber 24. A non-return valve 26 of the partition 20 permits one way fluid communication from the purge chamber 24 to the service chamber 22.

A desiccant compartment 28 is located downstream of the inlet 14 within the purge chamber 24. A passageway 30 having a non-return valve 32 is arranged between the desiccant compartment 28 and the purge chamber 24. The non-return valve 32 is arranged such that air can pass from the inlet 14 through the desiccant compartment 28 and into the purge chamber 24 but not in the reverse direction. The desiccant compartment 28 is further provided with a second passageway 34 with a restriction 36 therein.

The control valve 18 is switchable between an inlet position and an exhaust position. The inlet position permits air received from the inlet to pass first into the purge chamber 24 via the desiccant compartment 28 and thereafter to the service chamber 22 via the non-return valve 26. The exhaust position of the control valve 18 permits air in the purge chamber 24 to flow through the desiccant compartment 28 and out to atmosphere via a vent 38 in the control valve housing.

The control valve 18 is connected to a controller 40 which under normal operating conditions periodically moves the control valve 18 to the exhaust position to permit regeneration of the desiccant in the desiccant chamber 28 by the dry air in the purge chamber 24. The controller is sensitive to the condition of the compressor (not shown) so that regeneration will not take place when the compressor is on load. According to the present invention the controller 40 is also operable so as to move the control valve 18 to the exhaust position when use of the vehicle ceases. For example, the controller may be sensitive to the vehicle's ignition system such that when the ignition system is switched off the control valve moves to the exhaust position and the desiccant is regenerated. The control valve 18 then reverts to the inlet position ready to receive air from the compressor when the vehicle is reactivated.

## Claims

1. A vehicle air braking system including an air compressor, an air dryer, an air dryer control valve (18) having a vent (38) to atmosphere, a reservoir (24) adapted to contain a quantity of dry air for use in regenerating desiccant (28) of the air dryer and means to exhaust dry air through the desiccant (28) to atmosphere, **characterised in that** the system further includes control means (40) sensitive to the operating condition of the vehicle and operable to cause regeneration of the desiccant (28) and purging of the control valve (18) when the vehicle engine is stopped.

2. A system according to claim 1 wherein said control means (40) are operable to open said vent (38) of the control valve.

3. A system according to claim 2 wherein said control means (40) are operable to close said vent (38) after regeneration.

4. A system according to claim 2 or claim 3 wherein said control valve (40) is a valve operated by a solenoid.

5. A system according to any preceding claim wherein said control means (40) is responsive to a state of the vehicle ignition system.

6. A system according to any preceding claim wherein the control valve (40) is switchable between an inlet position, where air received at an inlet thereof passes to the reservoir (24) via the desiccant (28), and an exhaust position where air in the reservoir (24) is permitted to flow through the desiccant (28) and control valve vent (38) to atmosphere.

7. A system as claimed in any preceding claim wherein the control valve (40) and vent (38) are provided in a common housing of the air dryer.

8. A system as claimed in any preceding claim wherein the control valve (40) is intermediate a desiccant chamber of the air dryer and the vent.

9. A system as claimed in any preceding claim wherein the reservoir surrounds the air dryer.

10. A method of regenerating an air dryer of a vehicle air braking system **characterised in that** the air dryer is regenerated and a control valve (38) of the air dryer purged at the end of the working day, the method comprising the steps of:
determining that the vehicle engine is stopped;
connecting a regeneration reservoir of dry air to the air dryer;
connecting the air dryer and control valve (38) to atmosphere; and
backflushing the air dryer and control valve (38) to remove moisture therefrom.

## Patentansprüche

1. Fahrzeugdruckluftbremsanlage mit einem Luftkompressor, einem Lufttrockner, einem Lufttrockner-Steuerventil (18) mit einem Abzug (38) an die Atmosphäre, einem Behälter (24), der zur Aufnahme einer Trockenluftmenge zur Verwendung für die Regenerierung von Trockenmittel (28) des Lufttrockners ausgelegt ist, und einem Mittel zum Ausleiten von Trockenluft durch das Trockenmittel (28) hindurch an die Atmosphäre, **dadurch gekennzeichnet, dass** die Anlage des weiteren Steuermittel (40) aufweist, die empfindlich auf den Betriebszustand des Fahrzeugs reagieren und betrieben werden können, um eine Regenerierung des Trockenmittels (28) und ein Entleeren des Steuerventils (18) zu bewirken, wenn der Fahrzeugmotor angehalten wird.

2. Anlage nach Anspruch 1, **dadurch gekennzeichnet, dass** die Steuermittel (40) zum Öffnen des Abzugs (38) des Steuerventils betriebsfähig sind.

3. Anlage nach Anspruch 2, **dadurch gekennzeichnet, dass** die Steuermittel (40) zum Schließen des Abzugs (38) nach der Regenerierung betriebsfähig sind.

4. Anlage nach Anspruch 2 oder 3, **dadurch gekennzeichnet, dass** es sich bei dem Steuerventil (40) um ein magnetgesteuertes Ventil handelt.

5. Anlage nach einem der voranstehenden Ansprüche, **dadurch gekennzeichnet, dass** das Steuermittel (40) auf einen Zustand der Fahrzeugzündanlage reagiert.

6. Anlage nach einem der voranstehenden Ansprüche, **dadurch gekennzeichnet, dass** das Steuerventil (40) zwischen einer Einlassstellung, in der an seinem Einlass empfangene Luft über das Trockenmittel (28) an den Behälter (24) verläuft, und einer Auslassstellung, in der im Behälter (24) befindliche Luft durch das Trockenmittel (28) und den Steuerventil-Abzug (38) hindurch an die Atmosphäre strömen kann, hin und her geschaltet werden kann.

7. Anlage nach einem der voranstehenden Ansprüche, **dadurch gekennzeichnet, dass** das Steuerventil (40) und der Abzug (38) in einem gemeinsamen Gehäuse des Lufttrockners vorgesehen sind.

8. Anlage nach einem der voranstehenden Ansprüche, **dadurch gekennzeichnet, dass** sich das Steuerventil (40) zwischen einer Trockenmittelkammer des Lufttrockners und dem Abzug befindet.

9. Anlage nach einem der voranstehenden Ansprüche, **dadurch gekennzeichnet, dass** der Behälter den Lufttrockner umgibt.

10. Verfahren zum Regenerieren eines Lufttrockners einer Fahrzeugdruckluftbremsanlage, **dadurch gekennzeichnet, dass** der Lufttrockner regeneriert und ein Steuerventil (38) des Lufttrockners am Ende des Arbeitstags entleert wird, wobei das Verfahren folgende Schritte umfasst:
Feststellen, dass der Fahrzeugmotor angehalten wird;
Anschließen eines Trockenluft enthaltenden Regenerierungsbehälters an den Lufttrockner;
Anschließen des Lufttrockners und des Steuerventils (38) an Atmosphäre; und
Spülen des Lufttrockners und des Steuerventils (38) zum Entfernen von Feuchtigkeit aus diesen.

## Revendications

1. Système de freinage pneumatique d'un véhicule comprenant un compresseur d'air, un assécheur d'air, une soupape de commande (18) de l'assécheur d'air présentant une purge (38) à l'atmosphère, un réservoir (24) prévu pour contenir une quantité d'air sec à utiliser pour régénérer le desséchant (28) de l'assécheur d'air et des moyens pour évacuer de l'air sec à travers le desséchant (28) vers l'atmosphère, **caractérisé en ce que** le système comporte en outre des moyens de commande (40) sensibles à l'état de fonctionnement du véhicule et pouvant être actionnés pour provoquer la régénération du desséchant (28) et purger la soupape de commande (18) lorsque le moteur du véhicule est à l'arrêt.

2. Système selon la revendication 1, dans lequel lesdits moyens de commande (40) peuvent être actionnés pour ouvrir ladite purge (38) de la soupape de commande.

3. Système selon la revendication 2, dans lequel lesdits moyens de commande (40) peuvent être actionnés pour fermer ladite purge après régénération.

4. Système selon la revendication 2 ou la revendication 3, dans lequel ladite soupape de commande (18) est une soupape actionnée par un électro-aimant.

5. Système selon l'une quelconque des revendications précédentes, dans lequel lesdits moyens de commande (40) sont sensibles à un état du système d'allumage du véhicule.

6. Système selon l'une quelconque des revendications précédentes, dans lequel la soupape de commande (18) est commutable entre une position d'admission, dans laquelle l'air reçu au niveau d'un orifice d'entrée de celle-ci passe dans le réservoir (24) à travers le desséchant (28), et une position de purge dans laquelle l'air situé dans le réservoir (24) peut s'écouler à travers le desséchant (28) et la purge (38) de la soupape de commande vers l'atmosphère.

7. Système selon l'une quelconque des revendications précédentes, dans lequel la soupape de commande (18) et la purge (38) sont logées dans un même bâti de l'assécheur d'air.

8. Système selon l'une quelconque des revendications précédentes, dans lequel la soupape de commande (18) est intermédiaire entre une chambre de dessiccation de l'assécheur d'air et la purge.

9. Système selon l'une quelconque des revendications précédentes, dans lequel le réservoir enveloppe l'assécheur d'air.

10. Procédé de régénération d'un assécheur d'air d'un système de freinage pneumatique d'un véhicule, **caractérisé en ce que** l'assécheur d'air est régénéré et une soupape de commande (18) de l'assécheur d'air est purgée à la fin de la journée de travail, le procédé comprenant les étapes suivantes :
• détermination de l'état d'arrêt du moteur du véhicule ;
• connexion d'un réservoir de régénération d'air sec à l'assécheur d'air ;
• liaison de l'assécheur d'air et de la soupape de commande (18) à l'atmosphère ; et
• rinçage de l'assécheur d'air et de la soupape de commande (18) pour en éliminer l'humidité.
